(19) Europäisches Patentamt
European Patent Office
Office européen des brevets

(11) **EP 4 039 761 A1**

(12) **EUROPEAN PATENT APPLICATION**
published in accordance with Art. 153(4) EPC

(43) Date of publication:
**10.08.2022 Bulletin 2022/32**

(21) Application number: **20871683.7**

(22) Date of filing: **28.09.2020**

(51) International Patent Classification (IPC):
**C09J 7/21** (2018.01)          **C09J 7/38** (2018.01)

(52) Cooperative Patent Classification (CPC):
**C09J 7/20; C09J 7/21; C09J 7/38; D02G 3/36**

(86) International application number:
**PCT/JP2020/036735**

(87) International publication number:
**WO 2021/065834 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019   JP 2019179183**

(71) Applicant: **NITTO DENKO CORPORATION**
**Ibaraki-shi**
**Osaka 567-8680 (JP)**

(72) Inventors:
• **TAKASHIMA, Atsushi**
  **Ibaraki-shi, Osaka 567-8680 (JP)**
• **MIZUHARA, Ginji**
  **Ibaraki-shi, Osaka 567-8680 (JP)**
• **MORISHITA, Hiromitsu**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **FILAMENTOUS ADHESIVE BODY**

(57)     The present invention relates to a threadlike adhesive body including a threadlike core material and an adhesive layer for covering a surface of the core material in a longitudinal direction, in which the core material contains a biomass-derived component, and the threadlike adhesive body has a biomass degree of 35% or more.

# FIG. 1

**Description**

TECHNICAL FIELD

The present invention relates to a threadlike adhesive body.

BACKGROUND ART

At the time of bonding articles, an adhesive body including a substrate and an adhesive layer may be used due to a demand for preventing dripping or the like. As the adhesive body, for example, an adhesive tape in which an adhesive layer is formed on one surface of a substrate has been known.

CITATION LIST

PATENT LITERATURE

Patent Literature 1: JP-A-2009-173715

SUMMARY OF INVENTION

TECHNICAL PROBLEM

In recent years, reduction in an environmental load has been strongly demanded in order to realize a sustainable society, and an improvement in biomass degree has also been demanded for an adhesive body.

Here, as a method for improving the biomass degree of an adhesive body, a method for improving the biomass degree of a substrate and a method for improving the biomass degree of an adhesive layer have been considered. However, when the biomass degree of the adhesive layer is improved, the adhesive strength may decrease and the manufacturing cost may increase. Therefore, in order to improve the biomass degree of the adhesive body, it is particularly desired to improve the biomass degree of the substrate.

However, a material containing a biomass-derived component (biomass material) is often hard or brittle. Therefore, in an adhesive tape as described above, the strength or the flexibility is easy to decrease when the substrate is made of a biomass.

In Patent Literature 1, various characteristics such as strength are improved by adding an additive made of a non-biomass material to polylactic acid that is a biomass material in order to solve such a problem.

However, in a film described in Patent Literature 1, a large amount of non-biomass material is added to the biomass material. Therefore, a sufficiently high biomass degree cannot be obtained in such a film.

The present invention has been made in view of the above, and an object of the present invention is to provide an adhesive body that ensures the strength and flexibility and reduces the environmental load.

SOLUTION TO PROBLEM

A threadlike adhesive body of the present invention for solving the above problems includes a threadlike core material and an adhesive layer configured to cover a surface of the core material in a longitudinal direction, in which the core material includes a biomass-derived component, and the threadlike adhesive body has a biomass degree of 35% or more.

According to one aspect of the threadlike adhesive body of the present invention, a difference ($\theta_0$ - $\theta_{30}$) between a contact angle $\theta_0$ of water in an amount of 2 μl measured immediately after the water drops onto the core material and a contact angle $\theta_{30}$ of the water measured after 30 seconds have elapsed from the dropping may be 20° or less.

According to another aspect of the threadlike adhesive body of the present invention, the core material may be a multifilament yarn.

According to still another aspect of the threadlike adhesive body of the present invention, the multifilament yarn may contain a filament which does not contain a biomass-derived component.

According to yet still another aspect of the threadlike adhesive body of the present invention, the multifilament yarn may be twisted.

ADVANTAGEOUS EFFECTS OF INVENTION

The threadlike adhesive body of the present invention ensures the strength and flexibility and reduces the environmental load.

BRIEF DESCRIPTION OF DRAWINGS

FIG. 1 is a cross-sectional view of a cross section perpendicular to a longitudinal direction of a threadlike adhesive body according to an embodiment of the present invention.

FIG. 2 is a schematic diagram for illustrating a method for measuring $\theta_0$ and $\theta_{30}$.

FIG. 3(a) is a perspective view for illustrating a method for evaluating adhesive strength of the threadlike adhesive body of the present invention, and FIG. 3(b) is a cross-sectional view of a cross section taken along a line A-A of FIG. 3(a).

DESCRIPTION OF EMBODIMENTS

Hereinafter, an embodiment of a threadlike adhesive body of the present invention will be described in detail. The present invention is not limited to the embodiment to be described below. In the drawings, members and parts having the same functions may be denoted by the same reference numerals, and duplicate descriptions may be omitted or simplified. The drawings of the embodiment are schematically described for the purpose of clearly illustrating the present invention, and do not necessarily accurately represent a size or scale of an actual product.

[Threadlike adhesive body]

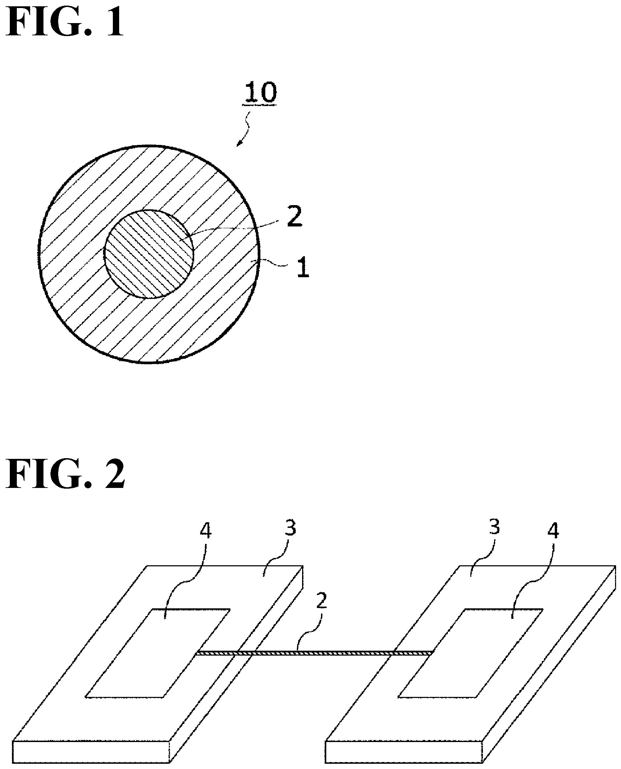

FIG. 1 is a cross-sectional view of a cross section perpendicular to a longitudinal direction of a threadlike adhesive body 10 according to an embodiment of the present invention.

The threadlike adhesive body 10 of the present embodiment is a threadlike adhesive body including a threadlike core material 2 and an adhesive layer 1 for covering a surface of the core material 2 in a longitudinal direction.

In the present embodiment, the core material contains a biomass-derived component.

In addition, the biomass degree of the threadlike adhesive body of the present embodiment is 35% or more.

The threadlike shape in the present description means a shape in which a length in the longitudinal direction is sufficiently long with respect to a length in the width direction, and a ratio (long axis/short axis) of a length of a long axis (the longest axis among the axes passing through the center of gravity of a cross-sectional shape) to a length of a short axis (the shortest axis among the axes passing through the center of gravity of the cross-sectional shape) in the shape of a cross section perpendicular to the longitudinal direction (hereinafter, also referred to as "cross-sectional shape") is, for example, 200 or less, preferably 100 or less, more preferably 50 or less, still more preferably 10 or less, yet still more preferably 5 or less, and particularly preferably 3 or less. Further, the threadlike shape means a state in which the threadlike adhesive body can be bent in various directions and angles like a yarn.

In the present description, the biomass-derived component refers to a component derived from a renewable organic resource. Typically, the biomass-derived component refers to a component derived from biological resources that can be continuously reproduced in the presence of sunlight, water and carbon dioxide. Therefore, components derived from fossil resources (fossil resource-based materials) that are depleted by use after mining are excluded. For example, the plant-derived component is a biomass-derived component.

A non-biomass-derived component refers to a component other than the biomass-derived component.

The biomass degree of the threadlike adhesive body refers to a ratio of the mass of the biomass-derived component contained in the threadlike adhesive body to the total mass of the threadlike adhesive body, and is calculated by the following equation. The biomass degrees of the core material and the adhesive are similar to the biomass degree of the threadlike adhesive body, and each of the biomass degrees is calculated by the following equation.

$$\text{Biomass degree [\%] of threadlike adhesive body} = 100 \times (\text{mass [g] of biomass-derived component contained in threadlike adhesive body})/(\text{total mass [g] of threadlike adhesive body})$$

$$\text{Biomass degree [\%] of core material} = 100 \times (\text{mass [g] of biomass-derived component contained in core material})/(\text{total mass [g] of core material})$$

$$\text{Biomass degree [\%] of adhesive} = 100 \times \text{(mass [g] of biomass-derived component}$$
$$\text{contained in adhesive)/(total mass [g] of adhesive)}$$

The biomass degree may also be measured in accordance with ASTM D6866-18, for example.

The present inventors have repeatedly conducted studies and found that in an adhesive body using a substrate containing a biomass-derived component, flexibility can be imparted to the substrate by using the substrate as the threadlike core material, and brittleness can be compensated by covering a surface (circumferential surface) of the core material in the longitudinal direction with an adhesive layer. That is, the present inventors have found that a threadlike adhesive body including a threadlike core material containing a biomass-derived component and an adhesive layer for covering a surface of the core material in the longitudinal direction can ensure the strength and flexibility and reduce the environmental load, and have completed the present invention.

The biomass degree of the threadlike adhesive body is set to 35% or more from the viewpoint of reducing the environmental load. The biomass degree is preferably 50% or more, more preferably 70% or more, still more preferably 90% or more, and most preferably 100%. The biomass degree of the threadlike adhesive body may be adjusted by adjusting the biomass degree of the core material and/ or the adhesive layer.

In the threadlike adhesive body of the present embodiment, deterioration of strength and flexibility, which is an adverse effect due to biomass of the substrate, is eliminated by forming the core material into a threadlike shape and covering the core material with the adhesive layer as described above, and therefore, it is possible to achieve both high biomass degree and strength and flexibility as described above.

On the other hand, when the biomass degree of the core material or the adhesive layer is excessively improved to improve the biomass degree of the threadlike adhesive body, there is a concern that problems such as a decrease in strength and flexibility, a decrease in adhesive strength, and an increase in manufacturing cost may be caused. Therefore, the biomass degree of the threadlike adhesive body is preferably 95% or less, more preferably 90% or less, and still more preferably 80% or less.

In addition, the present inventors have repeatedly conducted studies and found that, when a yarn such as a cotton yarn into which an adhesive is likely to permeate is used as a core material in a threadlike adhesive body, the adhesive permeates and adheres not only to an outer circumferential surface of the core material, which contributes to the adhesiveness, but also to the inside of the core material, and thus it is required to use a large amount of adhesive in order to exhibit sufficient adhesive strength. Since the adhesive generally has a biomass degree lower than that of the core material, an increase in the amount of the adhesive used leads to a decrease in the biomass degree of the entire threadlike adhesive body. Therefore, from the viewpoint of reducing the environmental load, it is preferable to use a core material into which the adhesive hardly permeates.

An example of an index for evaluating the ease of permeation of the adhesive into the core material includes a difference ($\theta_0$ - $\theta_{30}$) between a contact angle $\theta_0$ of water in an amount of 2 μl measured immediately after the water drops onto the core material and a contact angle $\theta_{30}$ of the water measured after 30 seconds have elapsed from the dropping. As the contact angle difference is increased, the adhesive is more likely to permeate into the core material, and therefore, a large amount of adhesive is required to ensure sufficient adhesive strength, which makes it difficult to improve the biomass degree.

Therefore, the contact angle difference ($\theta_0$ - $\theta_{30}$) is preferably 20° or less, more preferably 15° or less, still more preferably 10° or less, and particularly preferably 5° or less. The lower limit of the contact angle difference ($\theta_0$ - $\theta_{30}$) is not particularly limited, and may be 0°.

The contact angle difference ($\theta_0$ - $\theta_{30}$) may be controlled, for example, by appropriately changing a material of the core material. In general, in the case where the core material contains a large amount of short fibers, a large amount of fibrils, or a large amount of air, the contact angle difference ($\theta_0$ - $\theta_{30}$) tends to be increased. Therefore, for example, when a yarn containing a large amount of long fibers or a yarn containing a small amount of fibrils is adopted as the material of the core material, or when the core material is twisted, the contact angle difference tends to be decreased.

As shown in FIG. 2, two acrylic plates 3 having a thickness of 2 cm are arranged side by side with a gap of 3 cm therebetween, and the core material 2 is stretched straight in a manner of straddling the gap and is stuck to upper surfaces of the acrylic plates with a tape 4. Next, 2 μl of water is dropped on the core material straddling the gap, and a contact angle $\theta_0$ of water immediately after dropping and a contact angle $\theta_{30}$ of water after 30 seconds have elapsed are measured using a contact angle meter (for example, product name: "Drop Master" manufactured by Kyowa Interface Science Co., Ltd.), so that the contact angle difference ($\theta_0$ - $\theta_{30}$) can be calculated from these values.

The form and materials of the core material are not particularly limited as long as the core material is threadlike and contains a biomass-derived component and the biomass degree of the entire threadlike adhesive body can be 35% or more. The form and materials may be appropriately adjusted in accordance with properties such as required strength, mass, and hardness.

The cross-sectional shape of the core material is typically circular, and may be various shapes such as an elliptical shape and a polygonal shape in addition to the circular shape.

The thickness of the core material is not particularly limited, and may be appropriately adjusted together with the thickness of the adhesive layer so that the thickness of the threadlike adhesive body is appropriate depending on its use. For example, the thickness of the threadlike adhesive body is set to 5 to 3,000 $\mu$m.

The core material in the threadlike adhesive body may be a monofilament composed of a single filament, may be a multifilament yarn composed of a plurality of filaments, may be a spun yarn, may be a processed yarn generally referred to as a textured yarn, a bulky yarn or a stretch yarn, which is subjected to crimping, bulking, or the like, may be a hollow yarn, or may be a yarn obtained by combining these yarns by twisting them or the like.

When the core material is a multifilament yarn, all the filaments constituting the multifilament yarn may contain a biomass-derived component, and only a part of the filaments may contain a biomass-derived component, and the other filaments may not contain a biomass-derived component. It is possible to easily adjust various characteristics, such as the biomass degree, the difficulty in permeation of the adhesive, and the strength, by adjusting a ratio of the number of the filaments containing the biomass-derived component to the total number of the filaments constituting the multifilament yarn.

Although a yarn containing a biomass-derived component tends to have low flexibility, the fineness of each filament constituting the multifilament yarn is reduced, and the flexibility is improved when a multifilament yarn is used as the core material. Therefore, the multifilament yarn is preferred also from the viewpoint of improving the flexibility.

The number of filaments constituting the multifilament yarn is not particularly limited, and may be appropriately adjusted in accordance with the intended use and desired characteristics of the threadlike adhesive body. The number is, for example, preferably 4 or more, more preferably 10 or more, still more preferably 15 or more, and particularly preferably 20 or more. In addition, the number is preferably 300 or less.

The multifilament yarn may be a twisted yarn that is twisted, or may be a non-twisted yarn that is not twisted. In order to further prevent the permeation of the adhesive into the core material, the core material is preferably a twisted multifilament yarn. The number of twists in the case of twisting the multifilament yarn is not particularly limited and may be above 0 twist/m. The number of twists is preferably 30 twists/m or more, more preferably 60 twists/m or more, and still more preferably 90 twists/m or more. On the other hand, when the number of twists is too large, the flexibility of the threadlike adhesive body may be impaired. Therefore, the number of twists is preferably 3,000 twists/m or less, more preferably 1,500 twists/m or less, still more preferably 800 twists/m or less, and particularly preferably 250 twists/m or less.

The materials of the core material are not particularly limited as long as the core material is threadlike and contains a biomass-derived component, and the biomass degree of the entire threadlike adhesive body can be 35% or more. The materials may be appropriately selected in accordance with the desired biomass degree, strength, mass, hardness, and the like.

Examples of a material containing a biomass-derived component include natural fibers. Examples of the natural fibers include plant fibers such as hemp and animal fibers such as silk and wool.

Examples of the material containing a biomass-derived component include biomass plastics. The biomass plastics are roughly classified into plastics composed of biomass-derived components and plastics composed of biomass-derived components and fossil-resource-derived components.

Examples of biomass plastics composed of biomass-derived components include polylactic acid, polyethylene (bioPE), nylon 11 (bioPA11), nylon 1010 (bioPA1010), and polyesters (bioPEs) such as polyethylene terephthalate (bioPET).

Examples of biomass plastics composed of biomass-derived components and fossil-resource-derived components include polyethylene terephthalate (bioPET), polybutylene succinate (bioPBS), polybutylene terephthalate succinate, polyamides 610, 410, 510, 1012, 10T, 11T, MXD10 (bioPA 610, 410, 510, 1012, 10T, 11T, MXD10), polycarbonate (bioPC), polyurethane (bioPU), an aromatic polyester, an unsaturated polyester, a phenol resin, an epoxy resin, a polylactic acid blend/PBAT, and a starch blend/polyester resin, which contain biomass-derived components.

From the viewpoint of making it difficult for the adhesive to permeate into the core material, polyesters or polyethylene, which is difficult to be impregnated with moisture, is particularly preferred.

From the viewpoint of reducing the environmental load, the biomass degree of the core material is preferably 25% or more, more preferably 50% or more, still more preferably 70% or more, and most preferably 100%.

On the other hand, when the biomass degree of the core material is excessively increased, there is a concern that problems such as a decrease in strength and flexibility, a decrease in adhesive strength, and an increase in manufacturing cost may be caused. Therefore, the biomass degree of the core material is preferably 95% or less, more preferably 80% or less, and still more preferably 70% or less.

The core material may contain various additives such as a filler (an inorganic filler, an organic filler or the like), an anti-aging agent, an antioxidant, an ultraviolet absorber, an antistatic agent, a lubricant, a plasticizer, and a colorant (a pigment, a dye, or the like) as necessary. The known or common surface treatment such as a corona discharge treatment, a plasma treatment or application of an undercoat agent may be performed on the surface of the core material.

In the threadlike adhesive body including the core material, the entire circumferential surface of the core material is not necessarily covered with the adhesive layer, and a part not including an adhesive layer may be included as long as the effect of the present invention is exhibited. The end surface of the core material may or may not be covered with the adhesive layer. For example, when the adhesive body is cut during a producing process or during use, the end surface of the core material may not be covered with the adhesive layer.

The adhesive layer can be obtained, for example, by applying an adhesive composition to a surface of a core material by dipping, immersion, coating, or the like, and heating and drying as necessary. The adhesive composition can be applied by using a conventional coater such as a gravure roll coater, a reverse roll coater, a kiss roll coater, a dip roll coater, a bar coater, a knife coater, and a spray coater.

The kind of the adhesive composition is not particularly limited. For example, an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive can be used. Among them, the rubber-based adhesive and the acrylic adhesive are preferred, and the acrylic adhesive is particularly preferred, from the viewpoint of adhesiveness. One kind of the adhesive composition may be used alone, or two or more kinds thereof may be used in combination.

The acrylic adhesive contains, as a main component, a polymer of monomers that mainly contain an alkyl (meth)acrylate such as ethyl acrylate, butyl acrylate, 2-ethylhexyl acrylate, isooctyl acrylate, and isononyl acrylate, and is obtained by adding remodeling monomers, such as acrylonitrile, vinyl acetate, styrene, methyl methacrylate, acrylic acid, methacrylic acid, maleic anhydride, vinylpyrrolidone, glycidyl methacrylate, dimethylaminoethyl methacrylate, hydroxyethyl acrylate, acrylamide, and $\gamma$-methacryloxypropyltrimethoxysilane, to these alkyl (meth)acrylates as necessary.

The rubber-based adhesive contains, as a main component, a rubber-based polymer such as natural rubber, a styrene-isoprene-styrene block copolymer, a styrene-butadiene-styrene block copolymer, a styrene-ethylene-butylene-styrene block copolymer, a styrene-butadiene rubber, polybutadiene, polyisoprene, polyisobutylene, butyl rubber, chloroprene rubber, and silicone rubber.

These adhesive compositions may be appropriately blended with adhesive-imparting resins such as rosin-based one, terpene-based one, styrene-based one, aliphatic petroleum-based one, aromatic petroleum-based one, xylene-based one, phenol-based one, coumarone indene-based one, and hydrogenated additives thereof, and various additives such as a cross-linking agent, a viscosity modifier (thickener), a leveling agent, a release modifier, a plasticizer, a softener, a filler, a coloring agent (pigments, dyes, or the like), a surfactant, an antistatic agent, a preservative, an age resister, a UV absorber, an antioxidant, and a light stabilizer.

The adhesive composition may also contain a biomass-derived component. However, when the biomass degree of the adhesive composition is too high, the adhesive strength may be reduced and the production cost may be increased. Therefore, the biomass degree of the adhesive layer is preferably smaller than the biomass degree of the core material.

As the adhesive, either type of a solvent type adhesive and a water-dispersible type adhesive may be used. Here, from the viewpoint of enabling high-speed coating, being environmentally friendly, and having a small influence (swelling or dissolving) on the core material caused by the solvent, the water-dispersible adhesive is preferred.

In the threadlike adhesive body, it is preferable that a large amount of adhesive adheres to the core material, from the viewpoint of adhesive strength. Specifically, the adhered amount of the adhesive (the mass of the adhesive layer per unit length) is preferably 2 mg/m or more, more preferably 5 mg/m or more, and still more preferably 8 mg/m or more. On the other hand, when the adhered amount of the adhesive is excessive, it is necessary to apply the adhesive to the core material a plurality of times in the production process, or it takes time to dry the applied adhesive, resulting in a low production efficiency. In addition, it is difficult to improve the biomass degree. Therefore, the adhered amount of the adhesive is preferably 200 mg/m or less, more preferably 180 mg/m or less, and still more preferably 160 mg/m or less.

The threadlike adhesive body may be provided with a separator on a surface of the adhesive layer until the threadlike adhesive body is used, and the adhesive surface may be protected. However, the separator is discarded when the threadlike adhesive body is used, so that it is preferable that the separator is not provided from the viewpoint of reducing the environmental load.

The threadlike adhesive body can be stuck to a narrow member or a narrow region while being prevented from protruding, and is also preferably applied to a complex shape such as a curved line, a curved surface, and an uneven shape, and is also preferred in terms of easy disassembly (rework).

For example, the threadlike adhesive body can be suitably used for fixing an article during the production of an electronic device, and can be applied to fixing of a narrow frame of a mobile terminal such as a mobile phone or a smartphone.

For example, when an adhesive tape is stuck to an adherend having a part with a complicated shape such as a curved line, a curved surface, or an uneven shape, a wrinkle or overlapping may occur in the adhesive tape in such a part, and it is difficult to finely stick the adhesive tape while preventing a protrusion. The part where a wrinkle or overlapping occurs may cause a decrease in the adhesive strength. In order to stick the adhesive tape while preventing the occurrence of a wrinkle or overlapping, it is conceivable to stick the adhesive tape after finely cutting the adhesive tape. However, workability significantly deteriorates. On the other hand, the threadlike adhesive body can be firmly stuck without causing a wrinkle or overlapping even when being stuck to a part having a complicated shape such as a curved line, a curved surface, and an uneven shape. Further, since such a threadlike adhesive body can be stuck to a part to be stuck at one time, that is, in one step, the threadlike adhesive body is excellent in workability and can be applied to an automation line.

Specifically, the threadlike adhesive body can be suitably used, for example, for fixing cables such as electric wires and optical fibers, optical fiber sensors such as LED fiber light and Fiber Bragg Gratings (FBG), various wire members (linear members) such as a yarn, a string, and a wire, and narrow members, in a desired form. Even in a case where a wire member or a narrow member is fixed to another member in a complicated shape, the threadlike adhesive body can be firmly fixed with excellent workability while suppressing protrusion, wrinkles, and overlapping in accordance with the complicated shape that the wire member or the narrow member have. In a case where the wire member or the narrow member is fixed to another member, the threadlike adhesive body is stuck in advance in accordance with a form in which the wire member or the narrow member is to be fixed on a surface of the other member, and then, the wire member or the narrow member can be bonded and fixed in accordance with the threadlike adhesive body stuck to the surface of the other member. Alternatively, the threadlike adhesive body is stuck to a wire member or a narrow member, and then, the wire member or the narrow member may be fixed to another member in a desired form.

The threadlike adhesive body can also be suitably used for temporary fixing (temporary tacking) of an article for temporarily fixing (temporarily tacking) one article to a surface of another article. More specifically, the threadlike adhesive body can be used for temporary fixing (temporary tacking) during production process of, for example, fiber products and leather products such as clothes, shoes, bags, and hats. However, the application is not limited to this example, and the threadlike adhesive body is suitably used for various applications in which temporary fixing (temporary tacking) is desired.

For example, when one article is fixed to a surface of another article, the one article is temporarily fixed and positioned on the surface of the other article in advance using the threadlike adhesive body, and then both articles are fixed (finally fixed) by a fixing method such as thermocompression bonding and sewing. In this case, the threadlike adhesive body easily and temporarily fixes the two articles without a fixing portion provided between the two articles. For example, in a case where a fiber product or a leather product is sewn, when temporary fixing is performed using the threadlike adhesive body, the temporary fixing can be easily performed while avoiding a part to be sewed, and the pressure-sensitive adhesive can be easily prevented from adhering to a needle.

In addition, the threadlike adhesive body can be well stuck while preventing a protrusion, a wrinkle, and overlapping even when shapes of two articles are a complicated shape such as a curved line, a curved surface, and an uneven shape. Further, the threadlike adhesive body can be stuck in one step, and workability is good.

Even in a case of a member that is likely to be deformed, such as fabric, cloth, and leather that forms a fiber product or a leather product, temporary fixing can be performed using the threadlike adhesive body, so that deformation of the member due to tension can be prevented, and a design after fixing (final fixing) is improved.

Further, after two articles are fixed (finally fixed) using the threadlike adhesive body, the threadlike adhesive body can be pulled out and removed if necessary from the two articles that are fixed (finally fixed). In this case, the adhesive can be prevented from squeezing out, and deterioration of a design due to aging discoloration of the remaining adhesive can be satisfactorily prevented.

[Examples]

Hereinafter, the present invention will be described in detail with reference to Examples, but the present invention is not limited to these Examples.

<Example 1>

(Preparation of Water-Dispersible Acrylic Adhesive for Forming Adhesive Layer)

Into a reaction vessel equipped with a cooling tube, a nitrogen introduction tube, a thermometer, and a stirrer, 40 parts by mass of ion-exchanged water was added, and stirring was performed at 60°C for 1 hour or more while introducing nitrogen gas to carry out nitrogen substitution. To this reaction vessel, 0.1 parts by mass of 2,2'-azobis[N-(2-carboxyethyl)-2-methylpropionamidine]n hydrate (polymerization initiator) was added. While the system was maintained at 60°C, a monomer emulsion A was gradually added dropwise thereto over 4 hours to allow an emulsion polymerization reaction to proceed. Examples of the monomer emulsion A include an emulsion obtained by adding 98 parts by mass of 2-ethylhexyl acrylate, 1.25 parts by mass of acrylic acid, 0.75 parts by mass of methacrylic acid, 0.05 parts by mass of lauryl mercaptan (chain transfer agent), 0.02 parts by mass of γ-methacryloxypropyltrimethoxysilane (manufactured by Shin-Etsu Chemical Co., Ltd., trade name: "KBM-503"), and 2 parts by mass of sodium polyoxyethylene lauryl sulfate (emulsifier) to 30 parts by mass of ion-exchanged water. After completion of the dropwise addition of the monomer emulsion A, the system was further kept at 60°C for 3 hours and cooled to room temperature, and pH was then adjusted to 7 by addition of 10% ammonia water to obtain an acrylic polymer emulsion (water-dispersible acrylic polymer) A.

An adhesive-imparting resin emulsion (manufactured by Arakawa Chemical Industries, Ltd., trade name: "E-865NT") was added in an amount of 24 parts by mass based on the solid content per 100 parts by mass of the acrylic polymer contained in the above acrylic polymer emulsion A. Further, the pH was adjusted to 7.2 and the viscosity was adjusted to 10 Pa s using 10 mass% ammonia water as a pH adjuster and polyacrylic acid (manufactured by Toagosei Co., Ltd., trade name: "ARON B-500") as a thickener. In this manner, a water-dispersible acrylic adhesive A for an adhesive layer was obtained.

(Production of Adhesive Article)

A composite yarn in which four polylactic acid yarns (280 dtex, TERRAMAC manufactured by Unitika Ltd.) having 48 filaments were bundled without being twisted was used as a core material.

The water-dispersible acrylic adhesive A was applied to the core material by dipping so that the adhered amount of the adhesive in the obtained adhesive article was 80 mg/m, and then dried at 80°C for 3 minutes to form an adhesive layer, thereby obtaining an adhesive article 1 (threadlike adhesive body 1).

<Example 2>

An adhesive article 2 (threadlike adhesive body 2) was obtained in the same manner as in Example 1, except that a composite yarn, which is obtained by bundling one polyethylene terephthalate (PET) yarn (280 dtex, manufactured by Teijin Frontier Ltd.) having 48 filaments and three polylactic acid yarns (280 dtex) having 48 filaments together without twisting, was used as a core material.

<Comparative Example 1>

The water-dispersible acrylic adhesive A was applied to a release liner in a manner of having a thickness of 30 $\mu$m after drying. The release liner with the water-dispersible acrylic adhesive A was bonded to both sides of a polylactic acid film (Eco-Roju SA101 manufactured by Mitsubishi Chemical Corporation, thickness: 50 $\mu$m), and the polylactic acid film was cut into a width of 1 mm, and then the release liner was removed, thereby obtaining a comparative adhesive article 1.

The adhesive articles obtained in Examples and Comparative Examples were evaluated as follows.

[Adhesive Strength]

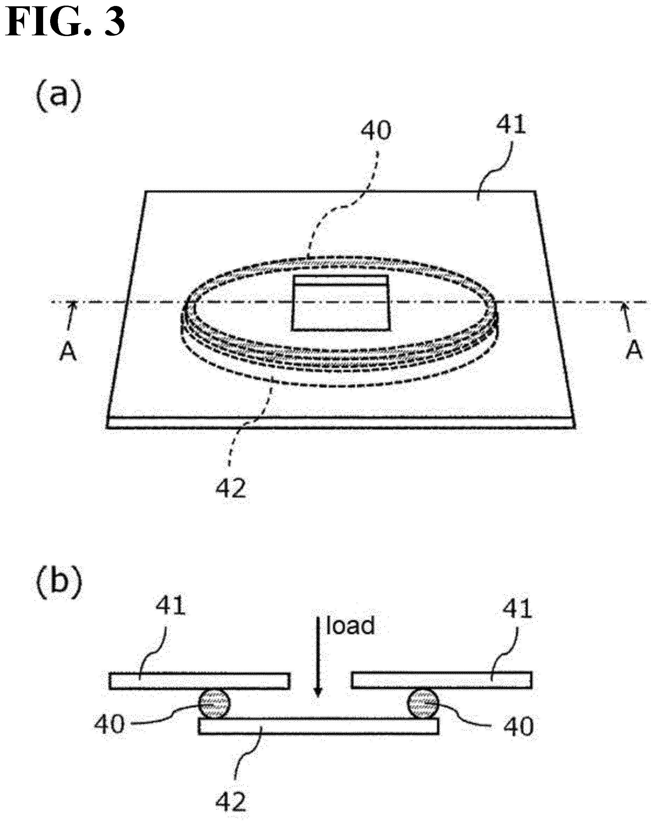

Using the adhesive article 40 obtained in Examples and Comparative Examples, a circular acrylic plate 42 having a thickness of 3 mm and a diameter of 70 mm and a rectangular polycarbonate resin plate 41 (a short side of 80 mm, a long side of 110 mm, and a thickness of 10 mm) provided with a rectangular slit (a short side of 30 mm and a long side of 40 mm) in a central portion were bonded to each other such that a center of the acrylic plate 42 and a center of the slit of the polycarbonate resin plate 41 coincided with each other, and pressure-bonded at a load of 2 kg for 10 seconds. As shown in FIGS. 3(a) and 3(b), the adhesive article 40 was disposed so as to have a length of 22 cm along an edge of the acrylic plate. FIG. 3(a) is a perspective view of the bonded state, and FIG. 3(b) is a cross-sectional view taken along a line A-A of FIG. 3(a).

Next, the polycarbonate resin plate 41 was fixed, and as shown in FIG. 3(b), a load was applied to the center of the acrylic plate 42 through the slit in a direction in which the acrylic plate 42 and the polycarbonate resin plate 41 were away from each other, and the maximum load observed before the acrylic plate 42 and the polycarbonate resin plate 41 were separated from each other was measured, thereby obtaining the adhesive strength (N/22 cm).

[Biomass Degree]

The biomass degree was calculated according to the following equation. The biomass degree was calculated when the biomass degree of a PET yarn used for the core material was set to 0%, the biomass degree of the polylactic acid yarn was set to 100%, and the biomass degree of the water-dispersible acrylic adhesive A for the adhesive layer was set to 0%.

$$\text{Biomass degree [\%] of threadlike adhesive body} = 100 \times \text{(mass [g] of biomass-derived component contained in threadlike adhesive body)/(total mass [g] of threadlike adhesive body)}$$

In addition, the following evaluation of the contact angle was performed on the threadlike adhesive body obtained in Examples.

[Contact Angle]

A difference ($\theta_0 - \theta_{30}$) between a contact angle $\theta_0$ of water measured immediately after 2 $\mu$l of water was dropped onto the core material used in each Example and a contact angle $\theta_{30}$ of water measured after 30 seconds had elapsed from the dropping was calculated.

As shown in FIG. 2, two acrylic plates 3 having a thickness of 2 cm were arranged side by side with a gap of 3 cm therebetween, and the core material 2 was stretched straight in a manner of straddling the gap and was stuck to upper surfaces of the acrylic plates with a tape 4. Next, 2 $\mu$l of water was dropped on the core material straddling the gap, and a contact angle $\theta_0$ of water immediately after dropping and a contact angle $\theta_{30}$ of water after 30 seconds had elapsed were measured using a contact angle meter (product name: "Drop Master" manufactured by Kyowa Interface Science Co., Ltd.), so that the contact angle difference ($\theta_0$ $\theta_{30}$) was calculated from these values.

The results are shown in Table 1 below.

[Table 1]

| | Shape of adhesive article | Composition of composite yarn | | Adhesive strength [N/22 cm] | Contact angle | | | Biomass degree [%] |
|---|---|---|---|---|---|---|---|---|
| | | PET yarn | Polylactic acid yarn | | $\theta_0$ [°] | $\theta_{30}$ [°] | $\theta_0 - \theta_{30}$ [°] | |
| Example 1 | Threadlike shape | 0 | 4 | 19.5 | 82 | 73 | 9 | 58 |
| Example 2 | Threadlike shape | 1 | 3 | 23.6 | 78 | 64 | 14 | 43 |
| Comparative Example 1 | Film shape | - | - | Hard and not stuck in circular shape | - | - | - | - |

As shown in Table 1, the threadlike adhesive bodies of Examples could be stuck in a circular shape along the edge of the acrylic plate, and exhibited sufficient adhesive strength. That is, an adhesive body having excellent strength and flexibility was obtained. Further, an adhesive body having a high biomass degree and a low environmental load was obtained.

On the other hand, the adhesive article of Comparative Example was poor in flexibility and could not be stuck in a circular shape. Therefore, the adhesive strength could not be evaluated.

INDUSTRIAL APPLICABILITY

According to the present invention, it is possible to provide a threadlike adhesive body that ensures the strength and flexibility and reduces the environmental load.

Although the present invention has been described in detail with reference to a specific embodiment, it will be apparent to those skilled in the art that various changes and modifications can be made without departing from the spirit and the scope of the present invention.

The present application is based on Japanese Patent Application No. 2019-179183 filed on September 30, 2019, the contents of which are incorporated herein as reference.

REFERENCE SIGNS LIST

10 Threadlike adhesive body
1 Adhesive layer
2 Core material
3 Acrylic plate
4 Tape
40 Adhesive article
41 Polycarbonate resin plate
42 Acrylic plate

**Claims**

1. A threadlike adhesive body comprising:

   a threadlike core material and an adhesive layer configured to cover a surface of the core material in a longitudinal direction,
   wherein the core material contains a biomass-derived component, and
   the threadlike adhesive body has a biomass degree of 35% or more.

2. The threadlike adhesive body according to claim 1, wherein a difference ($\theta_0$ - $\theta_{30}$) between a contact angle $\theta_0$ of water in an amount of 2 $\mu$l measured immediately after the water drops onto the core material and a contact angle $\theta_{30}$ of the water measured after 30 seconds have elapsed from the dropping is 20° or less.

3. The threadlike adhesive body according to claim 1 or 2, wherein the core material is a multifilament yarn.

4. The threadlike adhesive body according to claim 3, wherein the multifilament yarn contains a filament which does not contain a biomass-derived component.

5. The threadlike adhesive body according to claim 3 or 4, wherein the multifilament yarn is twisted.

# FIG. 1

# FIG. 2

# FIG. 3

(a)

(b)

**INTERNATIONAL SEARCH REPORT**

| International application No. |
| --- |
| PCT/JP2020/036735 |

**A. CLASSIFICATION OF SUBJECT MATTER**
Int.Cl. C09J7/21(2018.01)i, C09J7/38(2018.01)i
FI: C09J7/38, C09J7/21

According to International Patent Classification (IPC) or to both national classification and IPC

**B. FIELDS SEARCHED**

Minimum documentation searched (classification system followed by classification symbols)
Int.Cl. C09J7/21, C09J7/38

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 3-231980 A (ISHIZAKI SHIZAI KK) 15 October 1991 (1991-10-15), claims, page 2, upper right column, lines 15-20, fig. 1 | 1-2<br>3-5 |
| Y<br>A | JP 2018-44139 A (IDEA GIKEN KK) 22 March 2018 (2018-03-22), claim 1 | 1-3, 5<br>4 |
| Y<br>A | WO 2015/056499 A1 (NITTO DENKO CORPORATION) 23 April 2015 (2015-04-23), claims 1-2, paragraph [0007] | 1-3, 5<br>4 |
| A | JP 48-55937 A (KANEGAFUCHI BOSEKI BABUSHIKI KAISHA) 06 August 1973 (1973-08-06), entire text, all drawings | 1-5 |
| A | JP 54-161650 A (TOKYO DENKI KAGAKU KOGYO KK) 21 December 1979 (1979-12-21), entire text, all drawings | 1-5 |

☒ Further documents are listed in the continuation of Box C.　　☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 09 October 2020 | 02 November 2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2020/036735 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 1-308471 A (NITTO DENKO CORPORATION) 13 December 1989 (1989-12-13), entire text, all drawings | 1-5 |
| A | JP 4-162508 A (SONY CHEMICALS CORPORATION) 08 June 1992 (1992-06-08), entire text, all drawings | 1-5 |
| A | WO 2019/065886 A1 (NITTO DENKO CORPORATION) 04 April 2019 (2019-04-04), entire text, all drawings | 1-5 |
| A | WO 2019/163788 A1 (NITTO DENKO CORPORATION) 29 August 2019 (2019-08-29), entire text, all drawings | 1-5 |

Form PCT/ISA/210 (second sheet) (January 2015)

**INTERNATIONAL SEARCH REPORT**
Information on patent family members

International application No.

PCT/JP2020/036735

| | | |
|---|---|---|
| JP 3-231980 A | 15 October 1991 | (Family: none) |
| JP 2018-44139 A | 22 March 2018 | (Family: none) |
| WO 2015/056499 A1 | 23 April 2015 | (Family: none) |
| JP 48-55937 A | 06 August 1973 | (Family: none) |
| JP 54-161650 A | 21 December 1979 | (Family: none) |
| JP 1-308471 A | 13 December 1989 | (Family: none) |
| JP 4-162508 A | 08 June 1992 | (Family: none) |
| WO 2019/065886 A1 | 04 April 2019 | (Family: none) |
| WO 2019/163788 A1 | 29 August 2019 | (Family: none) |

Form PCT/ISA/210 (patent family annex) (January 2015)

**EP 4 039 761 A1**

**Patent documents cited in the description**

- JP 2009173715 A
- JP 2019179183 A